# EUROPÄISCHE PATENTSCHRIFT

(11) **EP 0 395 781 B1**
(45) Veröffentlichungstag und Bekanntmachung des Hinweises auf die Patenterteilung: **04.08.1993**
(21) Anmeldenummer: 89108060.8
(22) Anmeldetag: 03.05.1989
(51) Int. Cl.: B60M 1/28, H02G 1/04

(54) **Klemme zum Spannen und Ziehen eines Rillen-Fahrdrahtes bei Montagearbeiten**
Pincers for stretching or drawing a grooved contact wire in an assembly process
Pince pour tendre et tirer un fil de contact à rainures lors de traveux de montage

(43) Veröffentlichungstag der Anmeldung: 07.11.1990
(73) Patentinhaber: SIEMENS AKTIENGESELLSCHAFT, 80333 München (DE)
(72) Erfinder: Ganshorn, Rolf-Dieter, D-6800 Mannheim 1 (DE); Olschewski, Michael, Dipl.-Ing., D-6703 Limburgerhof (DE)

(56) Entgegenhaltungen:
- FR-A- 1 364 629
- FR-A- 2 048 164

## Beschreibung

Die Erfindung betrifft eine Klemme zum Spannen und Ziehen eines Rillen-Fahrdrahtes bei Montagearbeiten.

Sowohl Rillen-Fahrdrähte als auch Seile müssen bei Montage-und Wartungsarbeiten zugfest abgespannt werden. Zu den Wartungsarbeiten zählen z.B. das Austauschen von Streckentrennern bei Rillen-Fahrdrähten sowie das Auswechseln von Isolatoren bei Seilen.

Bei einer bekannten Klemme für einen Rillen-Fahrdraht wird dieser z.B. durch Hebelkraft oder Keilwirkung an seinem Außendurchmesser geklemmt. Dies erfordert einen erheblichen Aufwand beim Befestigen bzw. beim Lösen der Klemme. Außerdem wird der Fahrdrahtspiegel, das ist die Fläche, an welcher der Pantograph entlang gleitet, im Bereich der Klemmstelle beschädigt. Dies führt am beschädigten Fahrdrahtspiegel zu einer erhöhten Abnutzung und zur Funkenbildung.

Bei einer weiteren bekannten Klemme erfolgt beim Spannen und Ziehen des Rillen-Fahrdrahtes eine außermittige Krafteinleitung auf diesen. Eine solche außermittige Krafteinleitung führt zu einer Knickung des Rillen-Fahrdrahtes in senkrechter Richtung. Eine derart starke Verformung des Rillen-Fahrdrahtes führt zu einem unerwünschten Springen des Pantographen im Bereich der Knickstelle. Sowohl Beschädigungen am Fahrdrahtspiegel als auch senkrechte Knickungen des Rillen-Fahrdrahtes erfordern gegebenenfalls ein Nacharbeiten am montierten Rillen-Fahrdraht.

Weiterhin ist in der FR-A-2 048 164 eine Klemmbackenform für eine Klemme zum Spannen und Ziehen eines Fahrdrahtes beschrieben. Diese Klemmbackenform ist abwechselnd gezahnt oder dem Rillenfahrdraht entsprechend profiliert. Die Zähne der Klemmbacke dringen fest in das obere Ende des Rillenfahrdrahtes ein. Um eine höhere Haltekraft zu erzielen, muß der Rillenfahrdraht also beschädigt werden.

Aufgabe der vorliegenden Erfindung ist es, eine Klemme der eingangs genannten Art zu schaffen, die bei einfacher Handhabung Beschädigungen sowie senkrechte Knickungen des Rillen-Fahrdrahtes vermeidet und die auch zum Spannen von Seilen geeignet ist.

Die Aufgabe wird erfindungsgemäß durch die im Anspruch 1 angegebenen Merkmale gelöst.

Bei der erfindungsgemäßen Klemme wird der Rillen-Fahrdraht in eine Nut eingelegt und mittels einer Klemmvorrichtung in seinen beiden Rillen geklemmt. Nach erfolgter Festklemmung kann dann über wenigstens ein Halteelement die Zugkraft auf den Rillen-Fahrdraht eingeleitet werden. Sowohl die Zugkrafteinleitung als auch die Klemmung erfolgt erfindungsgemäß in der gleichen Ebene. Da die beiden Rillen waagrecht am Rillen-Fahrdraht angeordnet sind, wird die bei der Klemmung unvermeidbare Knikkung des Rillen-Fahrdrahtes in die waagrechte Ebene verlegt. Eine solche Knickung des Rillen-Fahrdrahtes stört, im Gegensatz zu einer senkrechten Knickung, jedoch die Stromabnahme durch den Pantographen nicht. Ein Nacharbeiten der waagrechten Knickung ist deshalb nicht erforderlich. Darüber hinaus wird durch die ausschließliche Klemmung des Rillen-Fahrdrahtes in seinen beiden Rillen auch eine Beschädigung des Fahrdrahtspiegels mit den eingangs erwähnten Nachteilen vermieden.

Vorteilhafte Ausgestaltungen der Erfindung sind in den Unteransprüchen beschrieben.

Insbesondere ergibt sich in der Weiterbildung nach Anspruch 5 die Möglichkeit, ohne Umbauarbeiten, wie z.B. Auswechseln von Klemmvorrichtung oder Halteelement, wahlweise Rillen-Fahrdrähte oder Seile zu klemmen. Dies ist von großem Vorteil, weil bei Montage- und Wartungsarbeiten an Fahrleitungen gegebenenfalls sowohl Rillen-Fahrdrähte als auch Seile, z.B. Leitungs- oder Tragseile, zugfest abgespannt werden müssen.

Bei einer Klemme gemäß Anspruch 6 erhält man in vorteilhafter Weise eine vollständig symmetrische Klemmwirkung auf den Rillen-Fahrdraht bzw. auf das Seil.

Bei einer Klemme nach Anspruch 7 können beide Klemmbacken mit den Fingern einer Hand geöffnet werden. Durch dieses besonders einfache Öffnen beider Klemmbacken wird das Aufsetzen der Klemme auf den Rillen-Fahrdraht bzw. auf das Seil vereinfacht.

Durch eine Ausgestaltung der Klemme nach Anspruch 8 wird die Handhabung nochmals vereinfacht, da nach dem Aufsetzen der Klemme zum Schließen der geöffneten Klemmbacken kein weiterer Handgriff mehr erforderlich ist.

Bei einer Klemme nach Anspruch 13 oder 14 erhält man einen zusätzlichen Schutz gegen Herausfallen des Rillen-Fahrdrahtes bzw. des Seiles aus der Nut. Darüber hinaus wird durch diese Klemme besonders zuverlässig ein Verkanten, ein Schrägstellen, ein Hochdrücken oder ein Lösen bei beginnender Zugkrafteinleitung verhindert.

Eine Weiterbildung der Klemme nach Anspruch 15 ermöglicht auf besonders einfache Weise die beiden Rillen des Rillen-Fahrdrahtes mit den äußeren Flankenspitzen der Zahnprismen der Klemmbacken in Übereinstimmung zu bringen. Auf genauso einfache Weise kann das Seil in die genaue Lage zu den muldenförmigen Ausformungen der Zahnprismen gebracht werden. Ist die Klemme gemäß Anspruch 16 ausgebildet, dann ist eine Umstellung zwischen den beiden Raststellungen besonders einfach und schnell möglich.

Bevorzugte Materialien, aus denen der Klemmenkörper gefertigt sein kann, sind in den Ansprüchen 18 und 19 beschrieben. Beide Klemmenkörper sind korrosionsbeständig. Eine Klemme gemäß Anspruch 18 zeichnet sich darüber hinaus noch durch ein geringeres Gewicht aus.

Die Erfindung sowie weitere vorteilhafte Ausgestaltungen werden im folgenden anhand eines Ausführungsbeispieles näher erläutert. Darin zeigt:
- FIG 1: eine Draufsicht auf die Unterseite der erfindungsgemäßen Klemme,
- FIG 2: einen Schnitt durch die Klemme entlang der Linie II-II in FIG 1,
- FIG 3: eine Detaildarstellung eines Exzenterbackens,
- FIG 4: einen Schnitt durch den Exzenterbacken entlang der Linie IV-IV in FIG 3.

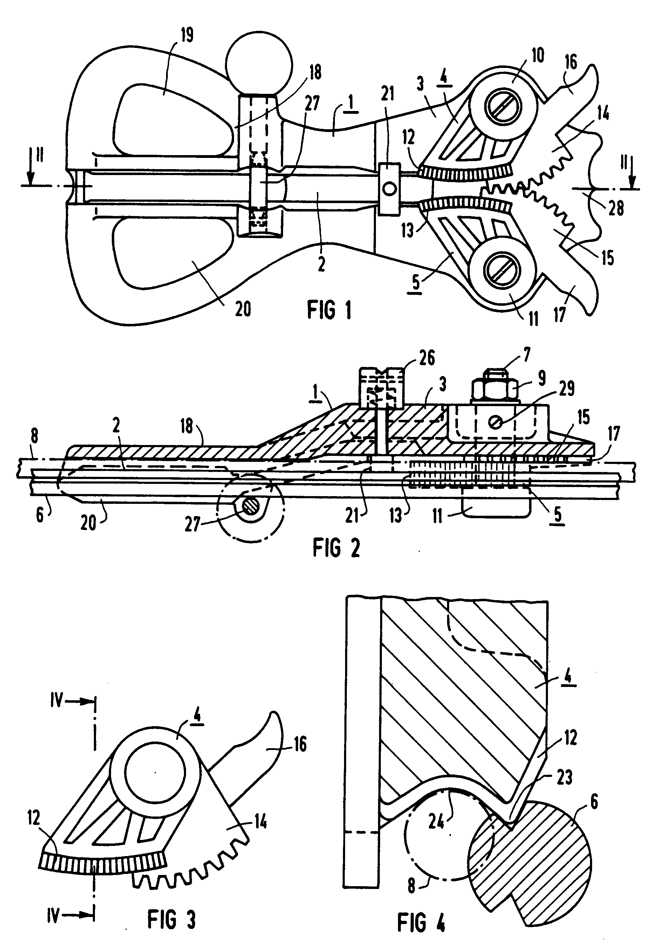

In FIG 1,2 ist mit 1 ein Klemmenkörper bezeichnet, an dessen Unterseite eine Nut 2 angeordnet ist. Die Nut 2 verläuft in der Längsachse des Klemmenkörpers 1. In diese Nut 2 ist, wie in FIG 2 dargestellt, sowohl ein Rillen-Fahrdraht 6 als auch ein Seil 8 (in FIG 2 strichpunktiert dargestellt) einlegbar. An einem hinteren Bereich 3 des Klemmenkörpers 1 ist, ebenfalls an seiner Unterseite, eine Klemmvorrichtung angeordnet, die aus zwei Exzenterbacken 4 und 5 besteht. Die beiden Exzenterbacken 4 und 5 sind symmetrisch zur Nut 2 angeordnet und sind, wie in FIG 2 dargestellt, durch Bolzen gehalten. Die Bolzen sind mittels einer Gegenmutter axial und mittels eines Gewindestiftes radial gesichert. Von den beiden Exzenterbacken 4 und 5 ist in FIG 2 nur die Halterung des Exzenterbackens 5 mittels des Bolzens 7 und der zugehörigen Gegenmutter 9 sowie des Gewindestiftes 29 dargestellt. Gemäß einer hier nicht dargestellten Ausführungsform der Klemme, kann die Sicherung des Bolzens auch durch einen Spannstift erfolgen. Eine Gegenmutter ist dann nicht mehr erforderlich, da der Spannstift den Bolzen sowohl axial als auch radial sichert. Beide Bolzen 7 werden jeweils von einer Abdeckkappe 10 und 11 abgedeckt. Die Exzenterbacken 4 und 5 weisen an den zueinander zugewandten Flächen muldenförmige Zahnprismen 12 und 13 auf. Darüber hinaus sind an beiden Exzenterbacken 4 und 5 ineinander eingreifende Zahnradsegmente 14 und 15 vorgesehen. An beiden Exzenterbacken 4 und 5 ist jeweils ein Betätigungsgriff 16 bzw.17 vorgesehen, der an dem Zahnradsegment 14 bzw.15 angeformt ist und der über den hinteren Bereich 3 des Klemmenkörpers 1 hinausragt.

An dem Klemmenkörper 1 sind ferner in einem vorderen Bereich 18 zwei Halteelemente angeordnet, die als Ösen 19 und 20 ausgebildet sind. Über diese Ösen 19 und 20 erfolgt beim Spannen die Zugkrafteinleitung auf den Rillen-Fahrdraht bzw. auf das Seil. Die Ösen 19 und 20 sind hierbei derart seitlich an dem Klemmenkörper 1 angeordnet, daß die Zugkrafteinleitung auf den Rillen-Fahrdraht 6 in der gleichen Ebene wie sein Festklemmen in den Rillen erfolgt. Dadurch, daß beidseitig Ösen 19 und 20 vorgesehen sind, kann die Zugkrafteinleitung, z.B. durch Hubzug, sowohl rechts als auch links vom Rillen-Fahrdraht 6 bzw. vom Seil 8 angesetzt werden.

Wie aus FIG 2 ersichtlich, liegt der hintere Bereich 3 des Klemmenkörpers 1 höher als der vordere Bereich 18. Dadurch wird auf einfache Weise erreicht, daß die Längsachse des geklemmten Rillen-Fahrdrahtes 6 und die Längsachsen der Ösen 19 und 20 in einer Ebene liegen. Da die beiden Rillen des Rillen-Fahrdrahtes 6 waagrecht an diesem angeordnet sind, liegen sowohl die Zugkrafteinleitung als auch die Klemmung des Rillen-Fahrdrahtes in der waagrechten Ebene. Die genaue Höhenlage der beiden Rillen des Rillen-Fahrdrahtes 6 zu den Zahnprismen 12 und 13 der beiden Exzenterbacken 4 und 5 wird auf besonders einfache Weise durch einen verstellbaren Anschlag 21 vorgegeben. Dieser Anschlag 21 ist in einer ersten und in einer zweiten Raststellung rastbar. In FIG 1 und 2 ist der Anschlag 21 in seiner ersten Raststellung verrastet. In der ersten Raststellung ist ein exaktes Einlegen des Rillen-Fahrdrahtes 6 möglich. Der Rillen-Fahrdraht 6 kommt dann, wie in FIG 4 am Beispiel des Exzenterbackens 4 dargestellt, mit seinen Rillen auf der äußeren Flankenspitze 23 des Zahnprismas 12 zum liegen.

In der zweiten Raststellung des Anschlags 21 kommt das Seil 8 in der muldenförmigen Ausformung 24 zum liegen. In FIG 2 und 4 ist die Lage des Seiles 8 strichpunktiert eingezeichnet. Für die Lage des Rillen-Fahrdrahtes 6 und des Seiles 8 im Exzenterbacken 5 gelten die Ausführungen zum Exzenterbacken 4 analog. Der Anschlag 21 ist über einen Einstellgriff 26 auf einfache Weise verstellbar. Er ragt, wie in FIG 2 dargestellt, aus der der Nut 2 gegenüberliegenden Seite des Klemmenkörpers 1 heraus.

Die beiden Exzenterbacken 4 und 5 werden durch in den FIG 1-4 nicht dargestellte Biegefedern in ihre Klemmstellung zurückgestellt. In Verbindung mit den Zahnradsegmenten 14 und 15 ergibt sich dadurch sowohl beim Öffnen als auch beim Schließen eine synchrone Bewegung der Exzenterbacken 4 und 5. Das Öffnen der Exzenterbacken 4 und 5 vor dem Aufsetzen der Klemme auf den Rillen-Fahrdraht 6 oder das Seil 8 geschieht mit den beiden Betätigungsgriffen 16 und 17. Die Betätigungsgriffe 16 und l7 sind so gestaltet, daß sie mit einer Hand betätigbar sind. Beim Zusammendrücken der beiden Betätigungsgriffe 16 und 17 öffnen sich die beiden Exzenterbacken 4 und 5 und beim Loslassen schließen die Exzenterbacken 4 und 5 aufgrund der von den Biegefedern ausgeübten Rückstellkraft selbsttätig.

Zur zusätzlichen Sicherung des eingelegten Rillen-Fahrdrahtes 6 bzw. des eingelegten Seiles 8 gegen Verkanten, Schrägstellen, Hochdrücken und Lösen bei beginnender Zugkrafteinleitung ist ein Riegel 27 vorgesehen, der die Nut 2 rechtwinklig überbrückt. Der Riegel 27 ist hierbei im vorderen Bereich 18 des Klemmenkörpers 1, also in der Nähe der Ösen 19 und 20 angeordnet. Er ist sowohl in seiner Öffnungs- als auch in seiner Schließstellung rastbar.

Das Aufsetzen der Klemme auf einen Rillen-Fahrdraht 6 bzw. auf ein Seil 8 geschieht folgendermaßen:
Zunächst wird der Anschlag 21 in seine erste Raststellung (Rillen-Fahrdraht 6) oder in seine zweite Raststellung (Seil 8) verrastet. Dann wird der Riegel 27 gegebenenfalls in seine Öffnungsstellung gebracht. Die Klemme wird anschließend auf den Rillen-Fahrdraht 6 bzw. das Seil 8 unter gleichzeitigem Öffnen der beiden Exzenterbacken 4 und 5 aufgesetzt. Das Öffnen der beiden Exzenterbacken 4 und 5 erfolgt hierbei durch Zusammendrücken der beiden Betätigungsgriffe 16 und 17. Nach dem ordnungsgemäßen Aufsetzen der Klemme werden die beiden Betätigungsgriffe 16 und 17 losgelassen. Die Exzenterbacken 4 und 5 kehren aufgrund der Rückstellkraft der Biegefedern in ihre Klemmstellung zurück. Nach dem Schließen des Riegels 27 kann über eine der beiden Ösen 19 oder 20 die Einleitung der Zugkraft erfolgen, die die Klemmkraft, die bereits von den Biegefedern der Exzenterbacken 4 und 5 ausgeübt wird, nochmals verstärkt.

Um das mittige Aufsetzen auf den Rillen-Fahrdraht 6 bzw. auf das Seil 8 zu erleichtern, ist in der Längsachse des Klemmenkörpers 1 ein am hinteren Bereich 3 angeordneter und vom Klemmenkörper 1 wegzeigender Richtungspfeil 28 vorgesehen.

Mit der vorstehend beschriebenen Klemme ist neben dem Festklemmen von Rillen-Fahrdrähten und Seilen auch ein Festklemmen von Rund-Fahrdrähten möglich. Die Klemmung von Rund-Fahrdrähten erfolgt hierbei wie die Klemmung von Seilen.

## Patentansprüche

1. Klemme zum Spannen und Ziehen eines Rillen-Fahrdrahtes (6) bei Montagearbeiten, bestehend aus
- einem Klemmenkörper (1) mit einer in diesem sich wenigstens teilweise erstreckenden Nut (2), in die der Rillen-Fahrdraht (6) einlegbar ist,
- einer Klemmvorrichtung (4,5), mittels welcher der Rillen-Fahrdraht (6) in seinen beiden Rillen klemmbar ist, und
- wenigstens einem Halteelement (19,20), über welches beim Spannen die Zugkrafteinleitung auf den Rillen-Fahrdraht (6) erfolgt, wobei
- das Halteelement (19,20) und die Klemmvorrichtung (4,5) am Klemmenkörper (1) in Richtung der Nut (2) hintereinander angeordnet sind, so daß das Festklemmen des Rillen-Fahrdrahtes (6) und die Zugkrafteinleitung auf diesen in der gleichen Ebene erfolgen.

2. Klemme nach Anspruch 1, wobei die Klemmvorrichtung zwei Klemmbacken (4,5) mit einer Spitze (23) umfaßt, die symmetrisch zu beiden Seiten der Nut (2) angeordnet sind und in der Klemmstellung mit ihren Spitzen (23) zangenartig in die Rillen des Rillen-Fahrdrahtes (6) eingreifen.

3. Klemme nach Anspruch 2, wobei die Klemmbacken (4,5) am Klemmenkörper (1) anliegen und durch Bolzen (7) gehalten sind, die jeweils in einer im Klemmenkörper (1) vorgesehenen Durchführung eingeführt und mittels einer Gegenmutter (9) axial und mittels eines Gewindestiftes (29) radial gesichert sind.

4. Klemme nach Anspruch 2, wobei die Klemmbacken (4,5) am Klemmenkörper (1) anliegen und durch Bolzen (7) gehalten sind, die jeweils in einer im Klemmenkörper (1) vorgesehenen Durchführung eingeführt und mittels eines Spannstiftes axial und radial gesichert sind.

5. Klemme nach einem der Ansprüche 2 bis 4, wobei die Klemmbacken (4,5) an den einander zugewandten Flächen im Querschnitt muldenförmig ausgebildet sind und an der einen Flanke (22) Spitzen (23) aufweisen, so daß wahlweise zwischen die Spitzen (23) der Rillen-Fahrdraht (6) oder in den Mulden (24) ein Seil (8) einklemmbar ist.

6. Klemme nach einem oder mehreren der Ansprüche 2 bis 5, wobei an den Klemmbacken (4,5) ineinander eingreifende Zahnradsegmente (14,15) zur synchronen Bewegung beider Klemmbacken (4,5) vorgesehen sind.

7. Klemme nach einem oder mehreren der Ansprüche 2 bis 6, wobei die Klemmbacken (4,5) jeweils einen Betätigungsgriff (16,17) aufweisen, der über einen hinteren Bereich (3) des Klemmenkörpers (1) hinausragt.

8. Klemme nach einem oder mehreren der Ansprüche 2 bis 7, wobei die Klemmbacken (4,5) mittels wenigstens eines Rückstellelementes aus einer geöffneten Stellung, in der der Rillen-Fahrdraht (6) bzw. das Seil (8) einlegbar ist, selbsttätig in ihre Klemmstellung rückstellbar ist.

9. Klemme nach Anspruch 8, wobei als Rückstellelement für die Klemmbacken (4,5) jeweils eine Biegefeder vorgesehen ist, die in der Abdeckkappe (10,11) des Bolzens (7) angeordnet ist.

10. Klemme nach einem oder mehreren der Ansprüche 2 bis 8, wobei die Klemmbacken Exzenterbacken (4,5) sind.

11. Klemme nach einem oder mehreren der Ansprüche 1 bis 10, wobei zwei Halteelemente (19,20) vorgesehen sind, die in einem vorderen Bereich (18) des Klemmenkörpers (1) beidseitig und in gleicher Höhenlage zueinander sowie symmetrisch zur Nut (2) angeordnet sind.

12. Klemme nach einem oder mehreren der Ansprüche 1 bis 11, wobei als Halteelemente Ösen (19,20) vorgesehen sind.

13. Klemme nach einem oder mehreren der Ansprüche 1 bis 12, wobei die Nut (2) ein Sicherungselement (27) aufweist.

14. Klemme nach Anspruch 13, wobei als Sicherungselement ein selbsttätig in seinen beiden Endstellungen einrastender Riegel (27) vorgesehen ist, der die Nut (2) rechtwinklig überbrückt.

15. Klemme nach einem oder mehreren der Ansprüche 1 bis 14, wobei in der Nut (2) ein Anschlag (21) angeordnet ist, der in einer ersten oder zweiten Raststellung rastbar ist, wobei in der ersten Raststellung der Rillen-Fahrdraht (6) und in der zweiten Raststellung das Seil (8) einlegbar ist.

16. Klemme nach Anspruch 15, wobei der Anschlag (21) über einen Einstellgriff (26) betätigbar ist, der aus der der Nut (2) gegenüberliegenden Seite des Klemmenkörpers (1) herausragt.

17. Klemme nach einem oder mehreren der Ansprüche 1 bis 16, wobei in der Längsachse des Klemmenkörpers (1) ein am hinteren Bereich (3) angeordneter und vom Klemmenkörper (1) wegzeigender Richtungspfeil (28) vorgesehen ist.

18. Klemme nach einem oder mehreren der Ansprüche 1 bis 17, wobei der Klemmenkörper (1) aus einer hochfesten Aluminiumlegierung besteht.

19. Klemme nach einem oder mehreren der Ansprüche 1 bis 17, wobei der Klemmenkörper (1) aus Bronze besteht.

## Claims

1. A clamp for clamping and tightening a grooved-contact wire (6) during assembly work, consisting of
- a clamping body (1) with a channel (2) extending at least partially into this body, into which channel the grooved-contact wire (6) is able to be inserted,
- a clamping device (4,5) by means of which the grooved-contact wire (6) is able to be clamped in both its grooves and
- at least one holding element (19,20) by way of which when clamping the introduction of tensile force occurs on the grooved-contact wire (6),
wherein
- the holding element (19,20) and the clamping device (4,5) are arranged one after another on the clamping body (1) in the direction of the channel (2), so that the clamping of the grooved-contact wire (6) and the introduction of tensile force on this occur in the same plane.

2. A clamp according to claim 1, wherein the clamping device has two clamping jaws (4,5) with a point (23), which are arranged symmetrically on either side of the channel (2) and which, when in the clamping position, engage the grooves of the grooved-contact wire (6) with their points (23) like pincers.

3. A clamp according to claim 2, wherein the clamping jaws (4,5) rest on the clamping body (1) and are held by bolts (7), which in each case are introduced into a through-hole provided in the clamping body (1) and are secured axially, by means of a counter-nut (9), and radially by means of a threaded pin (29).

4. A clamp according to claim 2, wherein the clamping jaws (4,5) rest on the clamping body (1) and are held by bolts, which in each case are introduced into a through-hole provided in the clamping body (1) and are secured axially and radially by means of a tightening pin.

5. A clamp according to one of claims 2 to 4, wherein the clamping jaws (4,5) are formed on surfaces facing each other, to be trough-shaped in cross-section, and have on one side (22) points (23), so that a cable (8) is able to be clamped optionally between the points (23) of the grooved-contact wire (6) or in the troughs (24).

6. A clamp according to one or several of claims 2 to 5, wherein toothed wheel segments (14,15) are provided engaging in each other on the clamping jaws (4,5) for synchronous movement of the two clamping jaws (4,5).

7. A clamp according to one or several of claims 2 to 6, wherein the clamping jaws (4,5) have in each case an operating handle (16,17) which projects over a rear region (3) of the clamping body (1).

8. A clamp according to one or several of claims 2 to 7, wherein the clamping jaws (4,5) may be readjusted automatically from an open position, in which the grooved-contact wire (6) or the cable (8) may be inserted, into their clamping position by means of at least one restoring element.

9. A clamp according to claim 8, wherein in each case a spiral spring is provided as restoring element for the clamping jaws (4,5), which spring is arranged in the covering cap (10,11) of the bolt (7).

10. A clamp according to one or several of claims 2 to 8, wherein the clamping jaws are eccentric jaws (4,5).

11. A clamp according to one or several of claims 1 to 10, wherein two holding elements (19,20) are provided, which are arranged in a front region (18) of the clamping body (1) on both sides and at the same height relative to each other as well as symmetrically in relation to the channel (2).

12. A clamp according to one or several of claims 1 to 11, wherein loops (19,20) are provided as holding elements.

13. A clamp according to one or several of claims 1 to 12, wherein the channel (2) has a securing element (27).

14. A clamp according to claim 13, wherein a bar (27) is provided locking automatically into its two end positions, which bar bridges the channel (2) at right angles.

15. A clamp according to one or several of claims 1 to 14, wherein a stop (21) is arranged in the channel (2), which is able to be locked in a first or second locking position, wherein the grooved-contact wire (6) is able to be laid in the first locking position and the cable (8) in the second locking position.

16. A clamp according to claim 15, wherein the stop (21) is able to be activated by way of an adjusting handle (26), which projects from the side of the clamping body (1) which is opposite the channel (2).

17. A clamp according to one or several of claims 1 to 16, wherein in the longitudinal axis of the clamping body (1) there is provided a directional indicator (28) arranged at the rear region (3) and pointing away from the clamping body (1).

18. A clamp according to one or several of the claims 1 to 17, wherein the clamping body (1) consists of one high-tensile aluminium alloy.

19. A clamp according to one or several of claims 1 to 17, wherein the clamping body (1) is made of bronze.

## Revendications

1. Pince pour tendre et tirer un fil de contact rainuré (6) lors de travaux de montage, constituée par
- un corps de pince (1) comportant une rainure (2) qui s'étend au moins partiellement dans ce corps et dans laquelle peut être inséré le fil de contact rainuré (6),
- un dispositif de serrage (4,5), au moyen duquel le fil de contact rainuré (6) peut être bloqué par serrage dans ces rainures, et
- au moins un élément de retenue (19,20), au moyen duquel, lors du serrage, une force de traction est appliquée au fil conducteur rainuré (6),
- l'élément de retenue (19,20) et le dispositif de serrage (4,5) étant disposés l'un derrière l'autre sur le corps (1) de la pince, dans la direction de la rainure (2), de sorte que le blocage ferme du fil de contact rainuré (6) et l'application de la force de traction à ce fil sont réalisés dans le même plan.

2. Pince suivant la revendication 1, dans lequel le dispositif de serrage comporte deux mâchoires de serrage (4, 5) possédant une pointe (23), qui sont disposées symétriquement des deux côtés de la rainure (2) et qui, dans la position de serrage, s'engagent par leurs pointes (23), à la manière d'une pince, dans les rainures du fil de contact rainuré (6).

3. Pince suivant la revendication 2, dans laquelle les mâchoires de serrage (4,5) s'appliquent contre le corps (1) de la pince et sont maintenues par des boulons (7), qui sont insérés respectivement dans un passage ménagé dans le corps (1) de la pince et sont bloqués axialement au moyen d'un contre-écrou (9) et radialement au moyen d'une tige filetée (29).

4. Pince suivant la revendication 2, dans laquelle les mâchoires de serrage (4, 5) s'appliquent contre le corps (1) de la borne et sont maintenues par des boulons (7), qui sont insérés respectivement dans un passage prévu dans le corps (1) de la pince et bloqués axialement et radialement au moyen d'une tige de serrage.

5. Pince suivant l'une des revendications 2 à 4, dans laquelle les mâchoires de serrage (4,5) sont réalisées, avec une forme d'auge en coupe transversale, au niveau des surfaces qui sont en vis-à-vis, et possèdent des pointes (23) au niveau d'un flanc (22) de sorte qu'un câble (8) peut être bloqué par serrage au choix entre les pointes (23) du fil conducteur rainuré (6) ou dans les auges (24).

6. Pince suivant une ou plusieurs des revendications 2 à 5, dans laquelle des secteurs dentés (14,15), qui engrènent réciproquement, sont prévus sur les mâchoires de serrage (4, 5) pour le déplacement synchrone des deux mâchoires de serrage (4, 5).

7. Pince suivant une ou plusieurs des revendications 2 à 6, dans laquelle les mâchoires de serrage (4, 5) possèdent chacune une poignée d'actionnement (16, 17), qui fait saillie au-delà d'une partie arrière (3) du corps (1) de la pince.

8. Pince suivant une ou plusieurs des revendications 2 à 7, dans laquelle les mâchoires de serrage (4, 5) peuvent être ramenées automatiquement d'une position ouverte, dans laquelle le fil de contact rainuré (6) ou le câble (8) peut être inséré, dans leur position de serrage, par au moins un élément de rappel.

9. Pince suivant la revendication 8, dans laquelle il est prévu comme élément de rappel pour les mâchoires de serrage (4, 5), respectivement un ressort spiral, qui est disposé dans le capuchon de revêtement (10, 11) du boulon (7).

10. Pince suivant une ou plusieurs des revendications 2 à 8, dans laquelle les mâchoires de serrage sont des mâchoires à excentrique (4, 5).

11. Pince suivant une ou plusieurs des revendications 1 à 10, dans laquelle il est prévu deux éléments de retenue (19, 20), qui sont disposés dans une partie avant (18) du corps (1) de la pince, des deux côtés et dans la même position en hauteur ainsi que symétriquement par rapport à la rainure (2).

12. Pince suivant une ou plusieurs des revendications 1 à 11, dans laquelle des oeillets (19, 20) sont prévus comme éléments de retenue.

13. Pince suivant une ou plusieurs des revendications 1 à 12, dans laquelle la rainure (2) possède un élément de sécurité (27).

14. Pince suivant la revendication 13, dans laquelle il est prévu, en tant qu'élément de sécurité, un verrou (27), qui s'encliquette automatiquement dans ses deux positions d'extrémité et s'étend à angle droit au-dessus de la rainure (2).

15. Pince suivant une ou plusieurs des revendications 1 à 14, dans laquelle dans la rainure (2) est disposée une butée (21), qui peut s'encliqueter dans une première et une seconde positions d'encliquetage, auquel cas dans la première position d'encliquetage, le fil conducteur rainuré (6) peut être inséré et dans la seconde position d'encliquetage, le câble (8) peut être inséré.

16. Pince suivant la revendication 15, dans laquelle la butée (21) peut être actionnée par l'intermédiaire d'une poignée de réglage (26), qui ressort sur le côté, situé à l'opposé de la rainure (2), du corps (1) de la pince.

17. Pince suivant une ou plusieurs des revendications 1 à 16, dans laquelle une flèche de direction (28), qui est disposée dans la partie arrière (3) et qui est tournée à l'opposé du corps (1) de la pince, est prévue sur l'axe longitudinal du corps (1) de la pince.

18. Pince suivant une ou plusieurs des revendications 1 à 17, dans laquelle le corps (1) de la pince est réalisé en un alliage d'aluminium très résistant.

19. Pince suivant une ou plusieurs des revendications 1 à 17, dans laquelle le corps (1) de la pince est réalisé en bronze.
